# EUROPÄISCHE PATENTSCHRIFT

(11) **EP 0 873 388 B1**
(45) Veröffentlichungstag und Bekanntmachung des Hinweises auf die Patenterteilung: **27.02.2002**
(21) Anmeldenummer: 96943993.4
(22) Anmeldetag: 18.12.1996
(51) Int. Cl.: C11D 1/825, C11D 11/00

(54) **VERFAHREN ZUM WASCHEN VON WÄSCHE**
PROCESS FOR THE WASHING OF LAUNDRY
PROCEDE POUR LAVER DU LINGE

(30) Priorität: 27.12.1995 DE 19548843
(43) Veröffentlichungstag der Anmeldung: 28.10.1998
(73) Patentinhaber: HENKEL-ECOLAB GmbH & CO. OHG, 40589 Düsseldorf (DE)
(72) Erfinder: SCHNEPF, Christine c/o Helmuth Metzger, D-89129 Langenau (DE); MERZ, Thomas, D-40723 Hilden (DE); KRACK, Ralf, D-40237 Düsseldorf (DE)
(74) Vertreter: Wacker, Manfred, Dr.
(86) Internationale Anmeldenummer: EP9605681
(87) Internationale Veröffentlichungsnummer: WO9724422

(56) Entgegenhaltungen:
- WO-A-92/05235
- GB-A- 2 204 321

## Beschreibung

Die vorliegende Erfindung betrifft ein Verfahren zum Waschen von Wäsche, insbesondere Berufskleidung, worin die Wäsche in einer üblichen Waschmaschine für gewerbliche Wäschereien mit einer flüssigen bis pastösen Tensidkombination gewaschen wird, sowie die Verwendung der flüssigen bis pastösen Tensidkombination in Waschmaschinen für gewerbliche Wäschereien, bei denen das Abwasser über eine Membrananlage aufbereitet wird.

In gewerblichen Wäschereibetrieben werden überwiegend Berufskleidung und andere Textilien aus dem Hotel- und Gaststättenbereich, Krankenhausbereich, aus der Lebensmittelindustrie, wie zum Beispiel Schlachthäusern, Metzgereien etc. sowie Textilien und Berufsbekleidung aus dem Automobilbereich gewaschen. Die dabei auftretenden Verschmutzungen führen häufig zu besonders hohen Belastungen des Abwassers. Man ist bestrebt beziehungsweise durch Vorschriften verpflichtet, das Abwasser aus gewerblichen Wäschereien, bevor es dem öffentlichen Abwassersystem zugeführt wird, aufzubereiten, indem derartige Schadstoffe entfernt werden.

Zum Entfernen der Schadstoffe und Verunreinigungen besteht beispielsweise die Möglichkeit, das Abwasser im Anschluß an das Waschverfahren durch Membrananlagen zu leiten. Die bereits bekannten Membrananlagen haben sich auf dem Gebiet der Abwasseraufbereitung als sehr wirksame Systeme erwiesen. Es wurde jedoch festgestellt, daß sich die Membranen beim Aufbereiten von Abwasser aus gewerblichen Wäschereien sehr schnell zusetzen und dann der Durchsatz des zu reinigenden Abwassers auf nicht mehr akzeptable Werte sinkt. Untersuchungen haben ergeben, daß das Zusetzen der Membranen in der Regel auf die in den eingesetzten Waschmitteln enthaltenen Tenside zurückzuführen ist.

Aus der internationalen Patentanmeldung WO 92/05235 ist eine flüssige, nichtionische Tensidkombination mit verbesserter Kältestabilität bekannt, die
a) 20 bis 50 Gew.-% eines Alkoholethoxylats, abgeleitet von primären, linearen C₁₂-C₁₅-Alkoholen mit durchschnittlich 2 bis 7 Ethylenoxidgruppen (EO),
b) 20 bis 50 Gew.-% eines Alkoholalkoxylats, abgeleitet von primären C₁₂-C₁₅-Alkoholen mit durchschnittlich 3 bis 7 Ethylenoxidgruppen (EO) und 2 bis 8 Propylenoxidgruppen (PO),
c) 5 bis 50 Gew.-% eines Alkoholethoxylats, abgeleitet von Gemischen primärer linearer und 2-Stellung methylverzweigter C₁₂-C₁₅-Alkohole (Oxoalkohole) mit durchschnittlich 2 bis 8 Ethylenoxidgruppen, enthält.

Aus der britischen Patentanmeldung GB-A-2 204 321 sind Wasch- und Reinigungsmittel bekannt, die in wäßriger Lösung 2 bis 35 Gew.-% C₈₋₂₂-Alkoholethoxylat mit 5 bis 25 Ethylenoxidgruppen, 0,5 bis 5 Gew.-% C₈₋₂₂-Alkoholalkoxylat mit 1 bis 12 Ethylenoxidgruppen sowie 1 bis 5 Propylen- und/oder Butylenoxidgruppen, 5 bis 35 Gew.-% Alkanolamin und 0,5 bis 6 Gew.-% Sequestriermittel enthalten.

Der vorliegenden Erfindung lag die Aufgabe zugrunde, eine flüssige Tensidkombination zu entwickeln, die mindestens eine im wesentlichen gleiche Reinigungswirkung aufweist, wie die aus dem Stand der Technik bekannten Mittel, jedoch bei der Abwasseraufbereitung durch Membrananlagen zu keinen Beeinträchtigungen bei der Durchführung der Wasseraufbereitung führt. Insbesondere sollten solche Tensidkombinationen zur Verfügung gestellt werden, die die in Wasseraufbereitungsanlagen eingesetzten Membranen nicht blockieren.

Gegenstand der vorliegenden Erfindung ist ein Verfahren zum Waschen von Wäsche, insbesondere von Berufskleidung, worin die Wäsche in einer üblichen Waschmaschine für gewerbliche Wäschereien mit einer flüssigen bis pastösen Tensidkombination, die
(a) 20 bis 80 Gew.-% Alkoholethoxylate, abgeleitet von primären, linearen oder in 2-Stellung methylverzweigten C₁₂-C₂₂-Alkoholen mit durchschnittlich 5 oder mehr Ethylenoxidgruppen (EO), und
(b) 80 bis 20 Gew.-% Alkoholalkoxylaten, abgeleitet von primären, linearen oder in 2-Stellung methylverzweigten C₁₂-C₂₂-Alkoholen (Oxoalkohole) mit durchschnittlich 4 bis 8 Ethylenoxidgruppen und 3 bis 8 Propylenoxidgruppen (PO)
enthält, gewaschen und das Abwasser über eine Membrananlage aufbereitet wird.

Ein weiterer Gegenstand der vorliegenden Erfindung ist die Verwendung einer flüssigen bis pastösen Tensidkombination, die
(a) 20 bis 80 Gew.-% Alkoholethoxylate, abgeleitet von primären, linearen oder in 2-Stellung methylverzweigten C₁₂-C₂₂-Alkoholen mit durchschnittlich 5 oder mehr Ethylenoxidgruppen (EO), und
(b) 80 bis 20 Gew.-% Alkoholalkoxylate, abgeleitet von primären, linearen oder in 2-Stellung methylverzweigten C₁₂-C₂₂-Alkoholen mit durchschnittlich 4 bis 8 Ethylenoxidgruppen und 3 bis 8 Propylenoxidgruppen (PO)
enthält, zum Waschen von Wäsche, insbesondere von Berufskleidung, worin die Wäsche in einer üblichen Waschmaschine für gewerbliche Wäschereien gewaschen und das Abwasser über eine Membrananlage aufbereitet wird.

Überraschenderweise wurde festgestellt, daß unter Verwendung von speziellen Alkoholalkoxylaten als nichtionischen Tensiden ein Abwasser anfällt, das ohne Probleme, insbesondere ohne die Membranen zu verstopfen beziehungsweise zu zerstören, über übliche Membrananlagen aufbereitet werden kann, ohne daß Beeinträchtigungen in der Waschleistung im Vergleich zu handelsüblichen Mitteln auftreten.

Das erfindungsgemäße Verfahren kann in üblichen Waschmaschinen für gewerbliche Wäschereien durchgeführt werden. Es sind beim Waschen keine besonderen Maßnahmen erforderlich.

Die erfindungsgemäß eingesetzte Tensidkombination enthält als wesentliche Bestandteile nichtionische Tenside ausgewählt aus den als Komponenten (a) und (b) genannten Alkoholalkoxylaten.

Die nichtionische Komponente (a) leitet sich vorzugsweise von primären, gesättigten und linearen Alkoholen mit 12 bis 22 Kohlenstoffatomen ab, in denen der Alkoholrest linear oder in 2-Stellung methylverzweigt sein kann beziehungsweise lineare und methylverzweigte Reste im Gemisch enthalten kann, so wie sie üblicherweise in Oxoalkoholresten vorliegen.

Als primäre, gesättigte und lineare Alkohole werden vorzugsweise solche mit 12 bis 14 Kohlenstoffatomen eingesetzt, so wie sie beispielsweise in Alkoholgemischen nativen Ursprungs vorliegen, die beispielsweise durch Synthese nach der Methode von Ziegler bzw. aus nativen Fettsäuren durch Reduktion erhalten werden. Die bevorzugten Alkoholgemische nativen Ursprungs können noch geringe Anteile an C₁₀- bzw. C₁₆-Alkoholen enthalten, jedoch liegt der Anteil an C₁₆-Alkohol unter 10 Gew.-%, insbesondere unter 5 Gew.-% und der Anteil an C₁₀-Alkohol unter 15 Gew.-%.

Die Oxoalkohole stellen üblicherweise ein Gemisch linearer und in 2-Stellung methylverzweigter Alkanole dar, worin der Anteil linearer Alkohole im allgemeinen überwiegt. Die Alkoholreste weisen 12 bis 15, vorzugsweise 13 bis 14 Kohlenstoffatome auf. Technische Gemische können zusätzlich geringe Anteile mit 11 beziehungsweise 15 Kohlenstoffatomen enthalten, jedoch soll deren jeweiliger Anteil vorzugsweise weniger als 10 Gew.-%, bezogen auf das technische Gemisch betragen.

Der angegebene Ethoxylierungsgrad der nichtionischen Komponente (a) beträgt vorzugsweise 5 bis 7. Der Gehalt der Mittel an der Komponente (a) beträgt vorzugsweise 20 bis 50 Gew.-% und insbesondere 25 bis 40 Gew.-%.

Die nichtionische Komponente (b) leitet sich von primären, gesättigten Alkoholen mit 12 bis 22 Kohlenstoffatomen ab, in denen der Alkoholrest linear oder in 2-Stellung methylverzweigt sein kann beziehungsweise lineare und methylverzweigte Reste im Gemisch enthalten kann, so wie sie üblicherweise in Oxoalkoholresten vorliegen. Bevorzugt sind jedoch lineare Reste aus Alkoholen nativen Ursprungs mit 12 bis 14 Kohlenstoffatomen, die gegebenenfalls entsprechende Anteile an C₁₀- und C₁₆-Alkoholresten enthalten können, wie sie bereits für die Komponente (a) beschrieben wurde. Komponente (b) enthält sowohl Ethylenoxidreste (EO) als auch Propylenoxidreste (PO). Diese können statistisch verteilt sein, vorzugsweise werden jedoch solche Verbindungen eingesetzt, bei denen der Alkohol zunächst ethoxyliert und anschließend propoxyliert ist, so wie es durch die schematische Formel R-(EO)x-(PO)y wiedergegeben wird. In dieser Formel steht R für den Rest aus dem Alkohol, der Ethoxlierungsgrad x für die Anzahl der EO-Gruppen und der Propoxlierungsgrad y für die Anzahl der PO-Gruppen. Die Anzahl der EO-Gruppen beträgt vorzugsweise 4 bis 8 und die Anzahl der PO-Gruppen vorzugsweise 3 bis 8, insbesondere 3 und 4.

Die erfindungsgemäß verwendeten Tensidmischungen können wasserfrei sein oder bis zu 20 Gew.-%, vorzugsweise 5 bis 15 Gew.-% Wasser enthalten. Für die Dosierbarkeit und die Lagerstabilität spielt der Wassergehalt nur eine untergeordnete Rolle. Da es sich bei den nichtionischen Tensiden (a) und (b) in aller Regel jedoch um technische Produkte handelt, die in unterschiedlicher Qualität und Reinheit erhalten und angeboten werden können, kann es vorkommen, daß sich die konzentrierten Tensidmischungen bei dem Einsatz bestimmter technischer Produktchargen trüben oder auch gelartige Niederschläge bilden. Diese Trübungen und Ausfällungen werden durch den Zusatz von Wasser zuverlässig vermieden. Im allgemeinen reichen hierfür Zusätze von 5 bis 10 Gew.-% aus.

Die Mittel können weitere Zusätze enthalten, sofern gewährleistet ist, daß diese löslich sind und die vorteilhaften Eigenschaften der Konzentrate nicht verändern. Hierzu zählen insbesondere Farb- und Duftstoffe, mit denen die Eigenfarbe beziehungsweise der Eigengeruch der Gemische überdeckt wird. Lösungsmittel können zwar grundsätzlich zugefügt werden, jedoch sind sie aus den angeführten Gründen weder erforderlich noch zweckmäßig.

Die konzentrierten Tensidmischungen gemäß der Erfindung verhalten sich normalerweise wie newtonsche Flüssigkeiten, das heißt ihre Viskosität ist unabhängig von den einwirkenden Scherkräften. Sie sind daher leicht zu fördern und zu dosieren, wobei sich ihre Viskosität in Abhängigkeit von der Temperatur vergleichsweise wenig ändert. Sie sind selbst nach mehrmonatiger Lagerung im Klimaschrank bei wiederholt wechselnden Temperaturen zwischen minus 10°C und plus 40°C lagerstabil, das heißt sie neigen nicht zum Entmischen. Die Konzentrate besitzen bei Temperaturen bis mindestens hinunter zu 0°C eine flüssige Konsistenz. Zwischen minus 10°C und 0°C können sie in flüssiger oder fester Form vorliegen. Auch die bei diesen Temperaturen in fester Form vorliegenden Konzentrate ergeben beim Auftauen wiederum klare und homogene Flüssigkeiten. Diese Eigenschaften machen sie besonders geeignet für eine vollautomatische Dosierung in gewerblichen Wäschereibetrieben.

Die Konzentrate können ohne weitere Zusätze zur Herstellung von Waschlaugen verwendet beziehungsweise im erfindungsgemäßen Verfahren eingesetzt werden. Vorzugsweise werden sie jedoch in Kombination mit üblichen Buildersubstanzen, sogenannten Waschalkalien, Cobuildern und Sequestrierungsmitteln sowie sonstigen üblichen Waschmittelzusatzstoffen angewendet.

Weitere geeignete Zusatzstoffe sind optische Aufheller, Enzyme, Bleichmittel aus der Klasse der Persauerstoffverbindungen, die üblicherweise zusammen mit Aktivatoren eingesetzt werden, sowie Aktivchlorverbindungen, ferner Schauminhibitoren sowie Farb- und Duftstoffe.

In Fällen, in denen die erfindungsgemäßen Konzentrate als Waschkraftverstärker beziehungsweise zur Verbesserung der Öl- und Fett-Auswaschbarkeit üblichen Waschmitteln zugesetzt werden, können letztere darüber hinaus übliche anionische Tenside enthalten. Hierzu zählen lineare Alkylbenzolsulfonate, wie C₉-C₁₃-Alkylbenzolsulfonat, Alkansulfonate, α-Sulfofettsäuren sowie Fettalkoholsulfate. Weiterhin können diese Mittel auch zusätzlich zu den Komponenten (a) und (b) weitere übliche nichtionische Tenside, insbesondere noch weitere Ethoxylate von C₁₂-C₁₈-Fettalkoholen und C₁₂-C₁₆-Oxoalkohole enthalten, obwohl diese vorzugsweise fehlen.

Üblicherweise werden die genannten sonstigen Waschmittelbestandteile und Zusatzstoffe getrennt von der erfindungsgemäßen Tensidkombination aufbewahrt und im Rahmen üblicher Waschverfahren in der gewerblichen Wäscherei meist als vorgefertigte Gemische der Waschlauge bedarfsgerecht zugesetzt. Bei Einsatz im gewerblichen Bereich wird üblicherweise mit enthärtetem Wasser gearbeitet.

Die erfindungsgemäße nichtionische Tensidkombination eignet sich in Verbindung mit den vorgenannten Waschmittelbestandteilen insbesondere zum Waschen stark verschmutzter Berufskleidung und zeichnet sich durch eine hohe Waschkraft gegenüber mineralölhaltigen Anschmutzungen aus.

Das aus der Durchführung des Waschverfahrens erhaltene Abwasser wird erfindungsgemäß aufbereitet, indem es über eine Membrananlage geleitet wird. Als Membrananlagen eignen sich alle üblicherweise zur Abwasseraufbereitung geeigneten Anlagen. In einer bevorzugten Ausführungsform wird das Abwasser durch mehrere hintereinander angeordnete Membranen geleitet. Es ist auch möglich, das Abwasser sowie das vorgereinigte Abwasser mehrfach durch eine Membran zu leiten. Die Anzahl der hintereinander angeordneten Membranen wird üblicherweise in Abhängigkeit von der aufzuarbeitenden Wassermenge pro Zeiteinheit bestimmt und hängt von der Größe der Membran ab.

Das Abwasser kann so lange durch die Membranen geleitet werden beziehungsweise durch die Membranen im Kreis geführt werden, bis das Wasser über eine ausreichende Reinheit verfügt. Um die Kosten des Gesamtwaschverfahrens, insbesondere den Wasserbedarf, zu senken, kann das über die Membranen filtrierte und damit gereinigte Abwasser für die Vorwäsche erneut verwendet werden.

Je nach Anzahl der Durchläufe durch die Membran wird der Rückstand in pumpbarer oder fester Form erhalten. Dieser Rückstand kann dann in an sich bekannter Weise der Abfallentsorgung zugeführt werden.

### Beispiele

Es wurden wäßrige Lösungen, die 0,05 Gew.-% einer pastösen Tensidkombination als Waschkraftverstärker in Verbindung mit einer in der gewerblichen Wäscherei üblichen Alkalikomponente enthielten und einen pH-Wert von 8 aufwiesen, bei 45°C über eine Membrananlage geleitet. Als Membran wurde eine Polypropylen-Membran mit einer Maschenweite von 0,2 µm eingesetzt. Die Lösungen wurden einmal durch die Membran geleitet. Als Vergleichswert wurde die Durchsatz-Leistung von reinem Wasser bestimmt.

| Tensidkombinationen: | |
|---|---|
| Beispiel 1 (gemäß der Erfindung) | 60 Gew.-% C_{12/14}-Fettalkohol x 5 EO |
| | 30 Gew.-% C_{12/14}-Fettalkohol x 5 EO und 4 PO |
| | 10 Gew.-% Wasser. |
| | |
| Beispiel 2 (Vergleich) | 40 Gew.-% C_{12/14}-Fettalkohol x 3 EO |
| | 40 Gew.-% C_{12/14}-Fettalkohol x 5 EO und 4 PO |
| | 10 Gew.-% C₁₃-Oxoalkohol + 3 EO |
| | 10 Gew.-% Wasser. |

Als Alkalikomponente wurde Leggil® super (Handelsprodukt der Anmelderin) eingesetzt.

In Beispiel 1 wurde nach 120 Minuten eine über die weitere Meßzeit von insgesamt 300 Minuten konstante Leistung der Membran erhalten, die der Leistung des reinen Wassers entsprach, nachdem zuvor der Durchsatz höher gewesen war.

In Beispiel 2 sank die Leistung der Membran kontinuierlich. Bereits nach 30 Minuten betrug die Leistung der Membran nur noch 71 %, nach 120 Minuten noch 46 % und nach 300 Minuten nur noch 32 % der Leistung von reinem Wasser.

Die Beispiele zeigen, daß die erfindungsgemäß eingesetzte Tensidlösung kontinuierlich über eine Membrananlage geleitet werden kann, ohne daß sich die Membran zusetzt, während die Tensidlösung, die handelsübliche Tenside enthält, die Membran blockiert und die Leistung der Membran stetig abnimmt.

## Patentansprüche

1. Verfahren zum Waschen von Wäsche, insbesondere von Berufskleidung, worin die Wäsche in einer üblichen Waschmaschine für gewerbliche Wäschereien mit einer flüssigen bis pastösen Tensidkombination, die
(a) 20 bis 80 Gew.-% Alkoholethoxylate, abgeleitet von primären, linearen oder in 2-Stellung methylverzweigten C₁₂-C₂₂-Alkoholen mit durchschnittlich 5 oder mehr Ethylenoxidgruppen (EO), und
(b) 80 bis 20 Gew.-% Alkoholalkoxylate, abgeleitet von primären, linearen oder in 2-Stellung methylverzweigten C₁₂-C₂₂-Alkoholen mit durchschnittlich 4 bis 8 Ethylenoxidgruppen und 3 bis 8 Propylenoxidgruppen (PO)
enthält, gewaschen und das Abwasser über eine Membrananlage aufbereitet wird.

2. Verfahren nach Anspruch 1, **dadurch gekennzeichnet, daß** die primären, gesättigten und linearen Alkohole der Komponenten (a) und (b) 12 bis 14 Kohlenstoffatome aufweisen.

3. Verfahren nach einem der Ansprüche 1 oder 2, **dadurch gekennzeichnet, daß** das aufbereitete Abwasser in der Vorwäsche wieder eingesetzt wird.

4. Verwendung einer flüssigen bis pastösen Tensidkombination, die
(a) 20 bis 80 Gew.-% Alkoholethoxylate, abgeleitet von primären, linearen oder in 2-Stellung methylverzweigten C₁₂-C₂₂-Alkoholen mit durchschnittlich 5 oder mehr Ethylenoxidgruppen (EO), und
(b) 80 bis 20 Gew.-% Alkoholalkoxylate, abgeleitet von primären, linearen oder in 2-Stellung methylverzweigten C₁₂-C₂₂-Alkoholen mit durchschnittlich 4 bis 8 Ethylenoxidgruppen und 3 bis 8 Propylenoxidgruppen (PO)
enthält, zum Waschen von Wäsche, insbesondere von Berufskleidung, worin die Wäsche in einer üblichen Waschmaschine für gewerbliche Wäschereien gewaschen und das Abwasser über eine Membrananlage aufbereitet wird.

## Claims

1. A process for washing laundry, more especially occupational clothing, in which the laundry is washed in a standard institutional washing machine with a liquid or paste-form surfactant combination containing
(a) 20 to 80% by weight of alcohol ethoxylates derived from primary, linear or 2-methyl-branched C₁₂₋₂₂ alcohols containing on average five or more ethylene oxide groups (EO) and
(b) 80 to 20% by weight of alcohol alkoxylates derived from primary, linear or 2-methyl-branched C₁₂₋₂₂ alcohols containing on average 4 to 8 ethylene oxide groups and 3 to 8 propylene oxide groups (PO)
and the wastewater is treated in a membrane unit.

2. A process as claimed in claim 1, **characterized in that** the primary, saturated and linear alcohols of components (a) and (b) contain 12 to 14 carbon atoms.

3. A process as claimed in claim 1 or 2, **characterized in that** the treated wastewater is reused in the prewash.

4. The use of a liquid or paste-form surfactant combination containing
(a) 20 to 80% by weight of alcohol ethoxylates derived from primary, linear or 2-methyl-branched C₁₂₋₂₂ alcohols containing on average five or more ethylene oxide groups (EO) and
(b) 80 to 20% by weight of alcohol alkoxylates derived from primary, linear or 2-methyl-branched C₁₂₋₂₂ alcohols containing on average 4 to 8 ethylene oxide groups and 3 to 8 propylene oxide groups (PO)
for washing laundry, more especially occupational clothing, in which the laundry is washed in a standard institutional washing machine and the wastewater is treated in a membrane unit.

## Revendications

1. Procédé de lavage de textile, en particulier de vêtements professionnels, dans lequel on lave les textiles dans une machine à laver habituelle peur lavages industriels avec une combinaison tensio-active liquide pâteuse qui contient :
(a) de 20 à 80 % en poids d'éthoxylates d'alcool, dérivés d'alcools en C₁₂ à C₂₂ primaires, linéaires ou méthyl-ramifiés en position 2. avec en moyenne 5 groupes oxyde d'éthylène (OE) ou plus, et
(b) de 80 à 20 % en poids d'alcoxylates d'alcools, dérivés d'alcools en C₁₂ à C₂₂ linéaires ou méthyl-ramifiés en position 2 avec en moyenne de 4 à 8 groupes oxyde d'éthylène et de 3 à 8 groupes oxyde de propylène (OP),
et on traite l'eau usée sur une installation à membrane.

2. Procédé selon la revendication 1,
**caractérisé en ce que**
les alcools primaires, saturés et linéaires des composants (a) et (b) contiennent de 12 à 14 atomes de carbone.

3. Procédé selon l'une des revendications 1 ou 2,
**caractérisé en ce que**
l'eau usée traitée est réintroduite dans le prélavage.

4. Utilisation d'une combinaison tensioactive liquide à pâteuse qui contient
(a) de 20 à 80 % en poids d'éthoxylatcs d'alcool, dérivés d'alcools en C₁₂ à C₂₂ primaires, linéaires ou méthyl-ramifiés en position 2, avec en moyenne 5 groupes oxyde d'éthylène (OE) ou plus, et
(b) de 80 à 20 % en poids d'alcoxylates d'alcools, dérivés d'alcools en C₁₂ à C₂₂ linéaires ou méthyl-ramifiés en position 2 avec en moyenne de 4 à 8 groupes oxyde d'éthylène et de 3 à 8 groupes oxyde de propylène (OP),
pour le lavage de textiles, en particulier de vêtements professionnels, le linge étant lave dans une machine à laver habituelle pour textiles professionnels et l'eau usée étant conduite sur une installation à membrane.
